## Europäisches Patentamt

## European Patent Office

## Office européen des brevets

(11) Veröffentlichungsnummer: **0 251 999**
**B1**

(12) # EUROPÄISCHE PATENTSCHRIFT

(45) Veröffentlichungstag der Patentschrift:
**11.10.89**

(51) Int. Cl.⁴: **F16B 13/14**

(21) Anmeldenummer: **87810323.3**

(22) Anmeldetag: **04.06.87**

(54) **Mittels einer aushärtenden Masse verankerbare Ankerstange.**

(30) Priorität: **23.06.86 DE 3620972**

(43) Veröffentlichungstag der Anmeldung:
**07.01.88 Patentblatt 88/1**

(45) Bekanntmachung des Hinweises auf die Patenterteilung:
**11.10.89 Patentblatt 89/41**

(84) Benannte Vertragsstaaten:
**AT CH DE FR LI SE**

(56) Entgegenhaltungen:
**DE-A- 2 705 975**
**DE-A- 2 734 633**
**FR-A- 2 339 088**
**GB-A- 2 033 993**
**US-A- 4 129 007**

**INDUSTRIE MINERALE, Band 64, Nr. 12, 1982,**
**Seiten 653-655, Paris, FR;**

(73) Patentinhaber: **HILTI Aktiengesellschaft,**
**FL-9494 Schaan(LI)**

(72) Erfinder: **Berchtold, Oliver, Kirchgasse 3a,**
**CH-9472 Grabs(CH)**
Erfinder: **Tobler, Alfred, Giessenstrasse 248,**
**FL-9491 Ruggell(LI)**

(74) Vertreter: **Wildi, Roland, Hilti Aktiengesellschaft**
**Patentabteilung, FL-9494 Schaan(LI)**

## Beschreibung

Die Erfindung betrifft eine Ankerstange zur Verankerung in einem Bohrloch eines Bauwerkes mittels einer aushärtenden Masse, mit Mitteln zur Lastaufnahme am hinteren Ende und einem in Längsrichtung verlaufende Segmente aufweisenden Befestigungsbereich am vorderen Ende, wobei zwischen den einzelnen Segmenten Zwischenräume vorgesehen sind.

Befestigungselemente, welche eine mittels einer aushärtenden Masse verankerbare Ankerstange aufweisen, werden wegen Ihrer Vorteile, wie hohe Auszugswerte, kein Spreizdruck, gute Beständigkeit gegen chemische Einflüsse und weitgehende Unempfindlichkeit gegen Toleranzabweichungen des Bohrlochdurchmessers in vielen Fällen angewendet.

Diese in der Fachsprache auch als Klebe- oder Verbundanker bezeichneten Befestigungselemente weisen jedoch bisher gegenüber den sogenannten Spreizdübeln den Nachteil auf, dass bei Befestigungen in der bereits gerissenen oder auf Risse anfälligen Zugzone eines Bauwerkes diese Elemente bisher aus Sicherheitsgründen nicht angewendet werden können. Verläuft nämlich ein Riss durch das Bohrloch, so löst sich beim Öffnen des Risses die Verbindung zwischen der Ankerstange und der aushärtenden Masse oder zwischen der aushärtenden Masse und der Bohrlochwandung, was zu einem Ausfall des Befestigungselementes führen kann.

Eine aus der DE-A 2 734 633 bekannte Ankerstange ist im Verankerungsbereich durch einen Längsschlitz in zwei Segmente geteilt. Ein in den Längsschlitz eingeführtes, keilförmiges Element dient dem Aufspreizen der Segmente. Bei der Verankerung der Ankerstange wird der Rest des Längsschlitzes mit aushärtender Masse ausgefüllt, so dass die beiden Segmente durch die aushärtende Masse miteinander fest verbunden werden. Verläuft ein Riss durch das Bohrloch einer solchen Ankerstange, wird beim Öffnen des Risses die adhäsive Verbindung zwischen der Bohrlochwandung und der aushärtenden Masse einerseits, sowie zwischen der aushärtenden Masse und der Ankerstange andererseits, gelöst. Die Folge davon ist ein Ausfall der mit der Ankerstange durchgeführten Befestigung.

Der Erfindung liegt die Aufgabe zugrunde, eine mittels aushärtender Massen verankerbare Ankerstange zu schaffen, die auch zur Verankerung in der rissanfälligen Zugzone eines Bauwerkes geeignet ist.

Gemäss der Erfindung wird dies dadurch erreicht, dass ein die Zwischenräume zwischen den Segmenten zur Aussenkontur hin und das vordere Ende stirnseitig verschliessendes Füllstück vorgesehen ist, das zumindest teilweise aus einem mit aushärtenden Massen nicht bindenden Kunststoff besteht oder mit einem mit aushärtenden Massen nicht bindenden Überzug versehen ist.

Durch das Füllstück wird ein Eindringen der aushärtenden Massen in die Zwischenräume der Ankerstange verhindert. Das Füllstück verschliesst zu diesem Zweck nicht nur die Öffnungen der Zwischenräume zur Aussenkontur hin sondern auch das vordere Ende der Zwischenräume stirnseitig.

Aufgrund des Verschliessens der Zwischenräume zwischen den Segmenten kommt eine Verbindung der Ankerstange mit der Bohrlochwandung nur im Bereich der Segmente zustande. Die durch die aushärtende Masse gebildete Verbindungsschicht zwischen der Ankerstange und der Bohrlochwandung erstreckt sich somit nicht über den gesamten Umfang der Ankerstange, sondern nur über die durch die Zwischenräume begrenzten Sektoren. Verläuft ein Riss durch das Bohrloch, so bleibt beim Öffnen des Risses die Verbindung zwischen den Segmenten der Ankerstange und der Bohrlochwandung bestehen. Der Riss verläuft somit im Bereich von Zwischenräumen entlang der Trennebene zwischen dem Füllstück und den Segmenten der Ankerstange.

Das Füllstück kann ein- oder mehrteilig ausgebildet sein und die Zwischenräume ganz oder nur an deren Aussenseite durchsetzen. Das Füllstück kann beispielsweise separat hergestellt und in die Zwischenräume eingesetzt werden. Weiterhin ist es möglich, durch Eintauchen der Ankerstange in eine verflüssigte Masse die Zwischenräume auszufüllen. In diesem Fall kann die an der Mantelfläche des Befestigungsbereiches anhaftende Masse anschliessend entfernt werden oder durch vorherige Behandlung dieser Fläche ein Ansetzen der verflüssigten Masse verhindert werden, damit beim Setzvorgang eine Verbindung zwischen der Ankerstange und der aushärtenden Masse zustande kommt. Als mit der aushärtenden Masse nicht bindender Kunststoff kann beispielsweise das unter dem Handelsnamen "Delrin" bekannte Aldehydpolymerisat verwendet werden.

Ist das Füllstück zumindest teilweise mit einem mit der aushärtenden Masse nicht bindenden Überzug versehen, so kann das Füllstück selbst, beispielsweise aus Metall oder einem anderen geeigneten Werkstoff bestehen. Der Überzug kann durch Aufspritzen oder Tauchen auf die Oberfläche des Füllstückes aufgebracht werden.

Damit die Ankerstange sich noch besser dem gegebenenfalls von Rissen durchsetzten Bauwerk anpassen kann, ist vorteilhafterweise die Ankerstange mit einer mit den Zwischenräumen zwischen den Segmenten in Verbindung stehenden Zentralbohrung versehen. Diese Zentralbohrung soll sich wenigstens über einen Teil der Länge der Längsschlitze erstrecken. Um ein Eindringen der aushärtenden Masse in die Zentralbohrung zu verhindern, kann die Öffnung der Zentralbohrung stirnseitig ebenfalls durch das Füllstück verschlossen sein.

Das Öffnen eines Risses kann einige Zehntelsmillimeter bis Millimeter betragen. Damit die Ankerstange ähnlich einer Spannzange diese Bewegung mitmachen kann, ist es zweckmässig, zwischen dem Befestigungsbereich und dem die Mittel zur Lastaufnahme aufweisenden Ende eine wenigstens teilweise von den Zwischenräumen durchsetzte Querschnittsverjüngung vorzusehen. Eine solche Querschnittsverjüngung kann durch eine Eindrehung von der Aussenseite her oder im Falle einer Zentralbohrung von der Innenseite her angebracht werden. Die Verjüngung bildet für die einzelnen durch die Zwischenräume gebildeten Segmente eine Biegestelle.

Die Erfindung soll nachstehend anhand der sie beispielsweise wiedergebenden Zeichnungen näher erläutert werden. Es zeigen:

Fig. 1 einen erfindungsgemässen Klebeanker, in verankertem Zustand, im Längsschnitt entlang der Linie I-I in Fig. 2 dargestellt;

Fig. 2 einen Querschnitt durch den in Fig. 1 dargestellten Anker, entlang der Linie II-II in Fig. 1;

Fig. 3 die Ankerstange des Klebeankers gemäss Fig. 1 und 2;

Fig. 4 einen Querschnitt durch die in Fig. 3 dargestellte Ankerstange, entlang der Linie IV-IV;

Fig. 5 das Füllstück des in Fig. 1 und 2 dargestellten Klebeankers;

Fig. 6 eine Stirnansicht des in Fig. 5 dargestellten Füllstückes, entsprechend dem Pfeil VI.

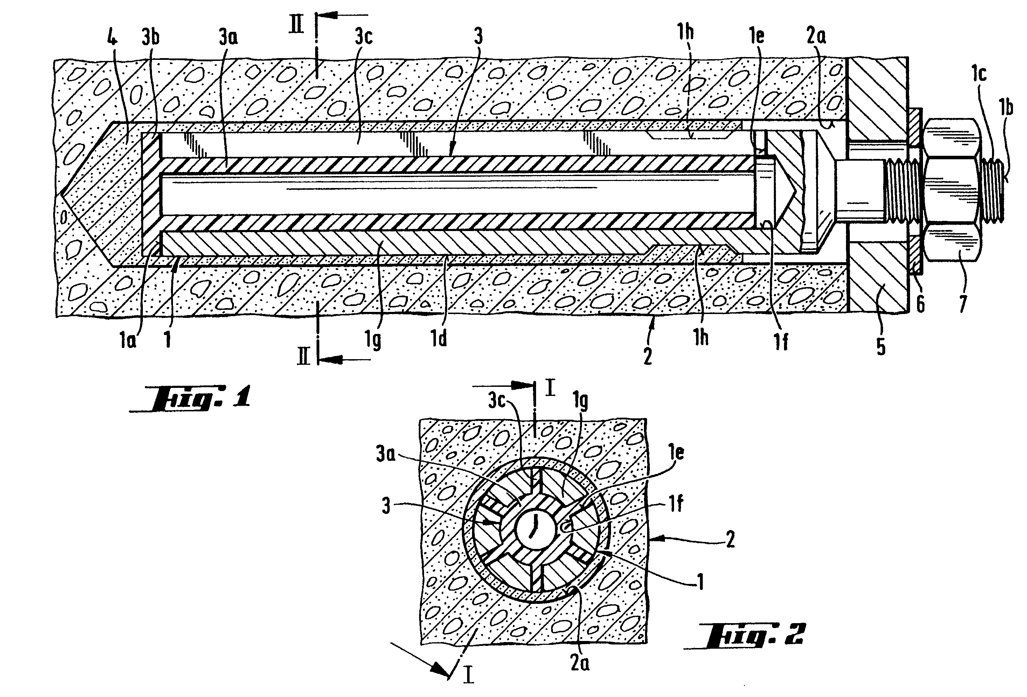

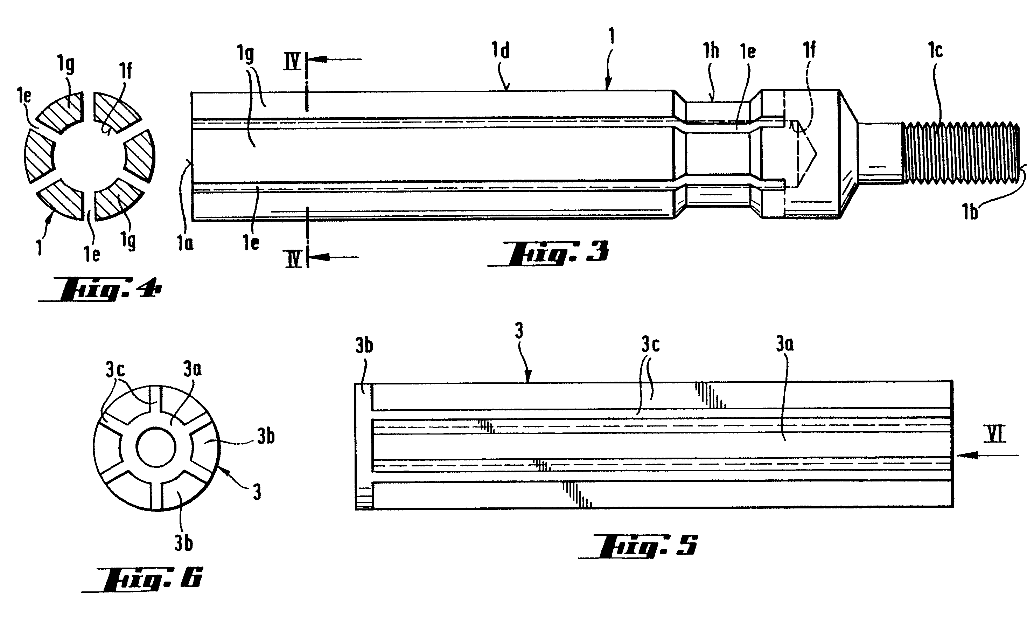

Die aus den Fig. 1 bis 4 ersichtliche, insgesamt mit 1 bezeichnete Ankerstange weist ein in Setzrichtung vorderes Ende 1a und ein rückwärtiges Ende 1b auf. Der an das rückwärtige Ende 1b anschliessende Bereich ist mit einem Gewinde 1c versehen. Das Gewinde 1c dient zur Lastaufnahme an der Ankerstange 1. Der an das vordere Ende 1a anschliessende Befestigungsbereich 1d ist mit radial verlaufenden Längsschlitzen 1e sowie mit einer Zentralbohrung 1f versehen. Durch die Längsschlitze wird der Befestigungsbereich 1d in einzelne radial verformbare Segmente 1g unterteilt. Diese Verformbarkeit der einzelnen Segmente 1g wird durch eine am rückwärtigen Ende des Befestigungsbereiches 1d angeordnete Querschnittsverjüngung 1h noch verbessert. In Fig. 1 und 2 ist die Ankerstange 1 in ein Bohrloch 2a eines insgesamt mit 2 bezeichneten Bauwerkes eingesetzt. Ein insgesamt mit 3 bezeichnetes Füllstück ist in die Zentralbohrung 1f der Ankerstange 1 eingeführt. Das Füllstück 3 besteht aus einer Ankerhülse 3a, einem damit verbundenen Flansch 3b und entsprechend der Anordnung der Längsschlitze 1e radial verlaufenden Längsrippen 3c. Durch das Füllstück 3 werden die Längsschlitze 1e an der Aussenkontur des Befestigungsbereiches 1d sowohl am Umfang als auch an der Stirnseite am vorderen Ende 1a der Ankerstange 1 verschlossen. Zwischen der Aussenkontur des Befestigungsbereiches 1d und dem Bohrloch 2a besteht ein Ringspalt. Dieser Ringspalt ist mit einer aushärtenden Masse 4 ausgefüllt. Durch das Füllstück 3 wird ein Eindringen der aushärtenden Masse in die Längsschlitze 1e sowie in die Zentralbohrung 1f der Ankerstange 1 verhindert. Dadurch wird die radiale Aufweitbarkeit des Befestigungsbereiches 1d sichergestellt. Verläuft nun ein Riss im Bauwerk 2 durch das Bohrloch 2a, so kann der Riss praktisch auch durch die Ankerstange 1 selbst verlaufen. Bei einem Aufweiten des Bohrloches 2a infolge eines sich öffnenden Risses bleiben die Segmente 1g der Ankerstange 1 mit der Bohrlochwandung verbunden. Ein Ausfall der Ankerstange 1 wird somit verhindert. In Fig. 1 dient die Ankerstange 1 beispielsweise zur Befestigung einer Platte 5 auf dem Bauwerk 2. Unter Zwischenlage einer Unterlagsscheibe 6 kann die Platte 5 mittels einer Mutter 7 nach dem Aushärten der Masse 4 gegen das Bauwerk 2 gespannt werden.

Fig. 5 und 6 zeigen das Füllstück 3. Das aus der Hülse 3a, dem Flansch 3b und den radial verlaufenden Längsrippen 3c bestehende Füllstück 3 ist vorzugsweise aus Kunststoff hergestellt. Um ein Verbinden der aushärtenden Masse 4 mit dem Füllstück 3 zu verhindern, wird dazu vorzugsweise ein mit der aushärtenden Masse nicht bindender Kunststoff verwendet. Dazu eignet sich beispielsweise das unter dem Handelsnamen "Delrin" bekannte Aldehydpolymerisat. Eine weitere Möglichkeit besteht darin, das Füllstück 3 wenigstens teilweise mit einem mit der aushärtenden Masse nicht bindenden Überzug zu versehen.

Anstelle eines vorgefertigten Füllstückes können jedoch die Schlitze 1e der Ankerstange 1 auch direkt mit einem mit der aushärtenden Masse nicht bindenden Material ausgefüllt werden.

**Patentansprüche**

1. Ankerstange (1) zur Verankerung in einem Bohrloch (2a) eines Bauwerkes (2) mittels einer aushärtenden Masse (4), mit Mitteln (1c) zur Lastaufnahme am hinteren Ende (1b) und einem in Längsrichtung verlaufende Segmente (1g) aufweisenden Befestigungsbereich (1d) am vorderen Ende (1a), wobei zwischen den einzelnen Segmenten (1g) Zwischenräume vorgesehen sind, dadurch gekennzeichnet, dass ein die Zwischenräume zwischen den Segmenten (1g) zur Aussenkontur hin und das vordere Ende stirnseitig verschliessendes Füllstück (3) vorgesehen ist, das zumindest teilweise aus einem mit aushärtenden Massen nicht bindenden Kunststoff besteht oder mit einem mit aushärtenden Massen nicht bindenden Überzug versehen ist.

2. Ankerstange nach Anspruch 1, gekennzeichnet durch eine mit den Zwischenräumen zwischen den Segmenten (1g) in Verbindung stehende Zentralbohrung (1f).

3. Ankerstange nach Anspruch 1 oder 2, gekennzeichnet durch eine zwischen dem Befestigungsbereich (1d) und dem die Mittel (1c) zur Lastaufnahme aufweisenden Ende (1b) angeordnete, wenigstens teilweise von den Zwischenräumen durchsetzte Querschnittsverjüngung (1h).

**Claims**

1. Anchor rod (1) for anchoring in a drilled hole (2a) in a structure (2) by means of a hardening adhesive (4) with means (1c) to carry the load at the rear end (1b) and, at the front end (1a), a fastening section (1d) having segments (1g) tapering in a longitudinal direction where intermediate spaces are provided between the individual segments (1g), which is characterized by a closing end-face filling piece (3) being provided for the intermediate spaces between the segments (1g) towards the outer contour and the front end which, at least partly, consists of a plastic that does not bond with the hardening adhesives or provided with a coating that does not bond with the hardening adhesives.

2. Anchor rod according to claim 1 characterized by a central bore (1f) which is in connection with the intermediate spaces between the segments (1g).

3. Anchor rod according to claims 1 and 2 characterized by a reduction of the cross-section (1h) between the fastening section (1d) and the end (1b) having the means (1c) to carry the load through which, at least partly, the intermediate spaces run.

## Revendications

1. Boulon d'ancrage (1) pour l'ancrage dans un perçage (2a) d'une construction (2) au moyen d'une matière durcissable (4), comprenant des moyens (1c) pour la réception de la charge à l'extrémité postérieure (1) et une section de fixation (1d) à l'extrémité antérieure (1a)) munie de segments (1g) orientés dans le sens longitudinal, des intervalles étant prévus entre les différents segments (1g), caractérisé en ce qu'il est prévu une pièce de remplissage (3) obturant les intervalles entre les segments (1g) en direction du contour extérieur et l'extrémité antérieure du côté frontal, laquelle pièce de remplissage est constituée, du moins en partie, d'une matière plastique ou munie d'un revêtement qui ne se lie pas avec des matières durcissables.

2. Boulon d'ancrage selon la revendication 1, caractérisé en ce qu'il comprend un alésage central (1f) qui communique avec les intervalles entre les segments (1g).

3. Boulon d'ancrage selon l'une des revendications 1 ou 2, caractérisé en ce qu'il présente une diminution de la section transversale (1h) située entre la section de fixation (1d) et l'extrémité (1b) munie des moyens (1c) pour la réception de la charge et traversée au moins partiellement par les intervalles.

**Fig. 1**

**Fig. 2**

EP 0 251 999 B1

Fig. 3

Fig. 4

Fig. 5

Fig. 6